**Europäisches Patentamt**

**European Patent Office**

**Office européen des brevets**

(19)

(11) Publication number: **0 339 349**
**A2**

(12) # EUROPEAN PATENT APPLICATION

(21) Application number: **89106325.7**

(51) Int. Cl.⁴: **H04L 25/03**

(22) Date of filing: **10.04.89**

| | |
|---|---|
| The title of the invention has been amended (Guidelines for Examination in the EPO, A-III, 7.3).<br><br>(30) Priority: **29.04.88 IT 2036988**<br><br>(43) Date of publication of application:<br>**02.11.89 Bulletin 89/44**<br><br>(84) Designated Contracting States:<br>**BE CH DE ES FR GB GR LI NL SE** | (71) Applicant: **TELETTRA Telefonia Elettronica e Radio S.p.A.**<br>**Via Cornalia 19**<br>**I-20124 Milano(IT)**<br><br>(72) Inventor: **Mengali, Umberto**<br>**Via Risorgimento, 16**<br>**I-56100 Pisa(IT)**<br>Inventor: **Spalvieri, Arnaldo**<br>**Via La Marca, 40**<br>**I-60019 Senigallia(IT)**<br><br>(74) Representative: **Strehl, Schübel-Hopf, Groening, Schulz**<br>**Maximilianstrasse 54 Postfach 22 14 55**<br>**D-8000 München 22(DE)** |

(54) **System and circuits for the minimum mean square error method applied to the transmission of digital signals.**

(57) The present invention refers to a system for the application of the M.M.S.E. for the transmission of numeric signals. According to the invention, for said combination the criterion of minimizing the mean square error (or an equivalent quantity) is imposed and this criterion is implemented by means of the gradient algorithm. The determination of the coefficients of the tipically linear combination is made by using correlators (series of multipliers and accumulators), implementing the gradient algorithm, while the combination operation is made by multipliers and adders.

FIG.1

EP 0 339 349 A2

## Description of the invention

This invention refers to a system for the so called M.M.S.E. combination (minimum mean square error) applied to the transmission of numeric signals.

Further the invention concerns an iterative algorithm applied in the search of the minimum mean square error.

Finally the invention includes the circuits for the implementation of the said system and algorithm.

### PRIOR ART

#### Problem

The invention intends to solve the problem of the combination of numeric signals carrying the same information.

This problem is typical in the QAM diversity modulated radio-links: in this field of radio linkages the data source transmits a signal, that, after having undergone various degradations, reaches two or more receivers.

Therefore each receiver observes a different version (owing to the different degradations) of the source signal and the combiner unit solve the problem of making a combination (typically of linear type) of the various versions for supplying at its output a sole signal as far as possible "similar" to the transmitted signal, i.e. of the best possible quality.

Let us see what is here intended under signal quality.

Generally speaking, it does not exist a sole and precise definition of the quality, in any case usaully it is identified as the ratio $Rx/Pd$, in which $Px$ indicates the mean power of the useful signal (that is its mean square value) and $Pd$ indicates the di sturbance power overlapped to the useful signal (that is the mean square error that the received signal shows with respect to the transmitted signal).

Generally speaking in the numeric transmission systems, e.g. in radio links, the overall disturbance power can be imagined as deriving from the addition of three disturbance powers, due to:

1) Thermal noise
2) Intersymbolic interference
3) Other interferences

#### Technical note

Presently the combination occurs according to one of the following criteria:

1) Maximum power
2) Minimum dispersion

Both these criteria show linear combination coefficients that are established according to the observation of spectrum characteristics of the sole combined signal, and more specifically:

1) The combiner unit having the maximum power combines the two (or more) signals received, so that the total power of the combined signal (that is the useful signal power added to the disturbance at the combiner unit output) is the maximum possible power.

This strategy is effective when the main cause of the disturbance is the thermal noise, as in presence of the sole thermal noise overlapped to the useful signal, the maximization of the power of the combined signal corresponds to the maximization of the ratio $Px/Pd$.

The strategy is uneffective when the intersymbolic interference is predominant as, in this case, the maximization of the output power does not correspond to the maximization of the ratio $Px/Pd$.

2) When the maximum dispersion occurs, the combiner unit combines the input signals for getting an output signal whose spectrum is as more as possible similar to the spectrum of the wished signal, that is the dispersions of the band power density are not present. It must be noticed that in this case the observation that established the criterion is applied onto the output signal spectrum. This strategy is effective when the dominant disturbance is caused by intersymbolic interference, as the dispersion of the

2

power density is generally a good indexing of the disturbance power generated by the intersymbolic interference.

It is uneffective when the effect of other disturbances is preponderant as, generally speaking, these disturbances do not cause a dispersion of the power density; consequenlty this criterion is uneffective and the combiner unit supplies a very noisy signal.


## SUMMARY OF THE INVENTION

The first object of the present invention is to avoid the above mentioned drawbacks thanks to the application of the M.M.S.E. combination to the transmission systems of numerical signals. According to the invention, the system for the application of the M.M.S.E. combination is characterized in that imposes the criterion of the minimization of the mean square error (or equivalent quantity) unsing the gradient algorithm.

Another object of the invention is to provide particularly simple and effective circuits, in which correlators implementing the gradient algorithm and multipliers and adders implementing the combination operation are used.

The main characteristics of the invention are specified (in an unlimiting form) in the annexed claims, while the different features and advantages of the invention shall be better apparent from the whole following description.


## General solution

The idea of the solution according to the invention is based on the application of the following criterion (M.M.S.E.): after having fixed the power of the useful output signal (with the aid of a gain control), the combiner unit carries out the combination for supplying a signal having the minimum disturbance power, that is, showing the minimum mean square error. This criterion can be advantageously satisfied independently from the type of disturbance present in the signal; it is widely used in other applications, but it is not used for solving the problem of combination.

It is again confirmed that the advantage of this solution with respect to the well-known ones, is that the application of the M.M.S.E. criterion leads to the maximisation of the ratio Px/Pd independently from the type of effective disturbances.

We underline that, as it shall be better explained in the following, the application of the M.M.S.E. criterion is based on the observation of the error present in the combined signal (or equivalent quantity) and on the observation of the combinating signals, in opposition to the well-known solutions that were based only on the observation of the spectrum of the combined signal. In formulas, said $\tilde{Z}_k$ the k-th sample of the combined complex signal and $\tilde{a}_k$ the k-th transmitted symbol (complex), the error (complex) $\tilde{e}_k$ is established as follows:

$$\tilde{e}_k \triangleq \tilde{Z}_k - \tilde{a}_k \qquad\qquad I$$

the quantity to be minimized is:

$$\varepsilon \triangleq E\left\{ |\tilde{e}_k|^2 \right\} \qquad\qquad II$$

in which the symbol $E\{\cdot\}$ represents the mean value of the quantity included in parenthesis.

The solution that is obtained minimizing the mean square error can be also obtained by means of the minimization of other equivalent quantities: one of these quantities is, e.g. the mean square value of the Sato's pseudo-error.

The Sato's pseudo-error can be defined as follows:

$$\tilde{e}_k^{\,s} \triangleq \tilde{z}_k - SGN\{\tilde{a}_k\} \cdot \frac{E\{|\tilde{a}_k|^2\}}{E\{|\tilde{a}_k|\}} \qquad III$$

in which the symbol SGN $\{\cdot\}$ indicates the quantity enclosed in parenthesis.

The algorithm used for obtaining the minimization of the described quantities is the gradient algorithm. This algorithm is based on the observation that if $\epsilon\,(\tilde{\underline{w}})$ is a scalar function of the complex vector $\tilde{\underline{w}}$ ($\tilde{\underline{w}} = \underline{w}' + j\underline{w}''$), the direction of maximum sloping of $\epsilon\,(\tilde{\underline{w}})$ is represented by the direction of the vector:

$$\nabla \mathcal{E}(\tilde{\underline{w}}) \triangleq \frac{\partial \mathcal{E}(\tilde{\underline{w}})}{\partial \underline{w}'} + j \frac{\partial \mathcal{E}(\tilde{\underline{w}})}{\partial \underline{w}''} \qquad IV$$
$$\mathcal{E}(\tilde{\underline{w}}).$$

so called gradient of $\epsilon\,(\tilde{\underline{w}})$.

For individualizing the minimum value of $\epsilon(\tilde{\underline{w}})$, it is sufficient to move on the surface $\epsilon\,(\tilde{\underline{w}})$ in a direction opposite to the direction indicated by $\nabla_{\epsilon}(\underline{w})$.

So we have:

$$\tilde{\underline{w}}^{(k+1)} = \tilde{\underline{w}}^{(k)} - \gamma \, \nabla \mathcal{E}(\tilde{\underline{w}}) \qquad V$$

that forms the iterative algorithm of the gradient. We premise that the equation of $\nabla\,\epsilon\,(\tilde{\underline{w}})$ involves the already defined error $\acute{e}_k$ (or an equivalent quantity such as $\acute{e}_k^5$).

However in the practical applications this quantity cannot be observed directly as the transmitted symbols are not known to the receiving station.

Then it is usual to substitute the the really transmitted symbol with the estimation $\hat{a}_k$ made by the receiver of the same symbol and to substitute the error with the error estimation $\hat{e}_k$ :

$$\hat{\tilde{e}}_k \triangleq \tilde{z}_k - \hat{\tilde{a}}_k \qquad VI$$

$$\hat{\tilde{e}}_k^{\,s} \triangleq \tilde{z}_k - SGN\{\hat{\tilde{a}}_k\} \frac{E\{|\tilde{a}_k|^2\}}{E\{|\tilde{a}_k|\}} \qquad VII$$

Then the quantity that is really minimized is:

$$\mathcal{E} \triangleq E\{|\hat{\tilde{e}}_k|^2\} \qquad VIII$$

or

$$\mathcal{E} \triangleq E\{|\hat{\tilde{e}}_k^{\,s}|^2\} \qquad IX$$

In the application, according to the invention, to the radio-links the presence of the adaptive equalizer acts to render feasible the combination as follows:

A at the input of the equalizer
B at the output of the equalizers.

Now we consider one of the possible fulfilment schemes for solving each one of the two cases

## A) COMBINATIQN UPSTREAM THE EQUALIZER

We indicate

$$\tilde{x}(t) = \sum_{i=-\infty}^{\infty} \tilde{a}_i \, \tilde{g}_x(t-iT) + \tilde{n}_x(t) \qquad X$$

$$\tilde{y}(t) = \sum_{i=-\infty}^{\infty} \tilde{a}_i \, \tilde{g}_y(t-iT) + \tilde{n}_y(t) \qquad XI$$

in which $\check{g}_x(t)$ and $\check{g}_y(t)$ are the impulse responses of the channels in which the symbols $\check{a}_i$ are transported and $\bar{n}_x(t)$, $\bar{n}_y(t)$ are the contributions due to the thermal noise and other interferences the signals to be combined and

$$\tilde{z}(t) = \tilde{d}_x \, \tilde{x}(t) + \tilde{d}_y \, \tilde{y}(t) \qquad XII$$

the combined signal: at the moments of the decision we have at the equalizer output:

$$\tilde{v}_k = \sum_{n=-N_1}^{N_2} \tilde{c}_n \, \tilde{z}_{k-n} \qquad XIII$$

The error at the equalizer output is:

$$\hat{\tilde{\varepsilon}}_k = \tilde{v}_k - \hat{\tilde{a}}_k \qquad XIV$$

while the error at the equalizer input is:

$$\hat{\tilde{e}}_k = \tilde{z}_k - \hat{\tilde{a}}_k \qquad XV$$

We define the quantity to be minimized with respect to $\check{d}_x$, $\check{d}_y$

$$\varrho \triangleq E\left\{ |\hat{\tilde{e}}_k|^2 \right\} \qquad XVI$$

With respect to $\check{c}_n$ we want to minimize:

$$\mathcal{E} \triangleq E\left\{ |\hat{\tilde{\varepsilon}}_k|^2 \right\} \qquad XVII$$

Applying the gradient algorithm, we can get:

$$\tilde{d}_x^{(k+1)} = \tilde{d}_x^{(k)} - \gamma\, \hat{\tilde{e}}_k\, \tilde{x}_k^* \qquad\qquad \text{XVIII}$$

$$\tilde{d}_Y^{(k+1)} = \tilde{d}_Y^{(k)} - \gamma\, \hat{\tilde{e}}_k\, \tilde{y}_k^* \qquad\qquad \text{XIX}$$

$$\tilde{c}_m^{(k+1)} = \tilde{c}_m^{(k)} - \alpha\, \hat{\tilde{\varepsilon}}_k\, \tilde{z}_{k-m}^* \qquad n = -N_1 \cdots N_2 \qquad \text{XX}$$

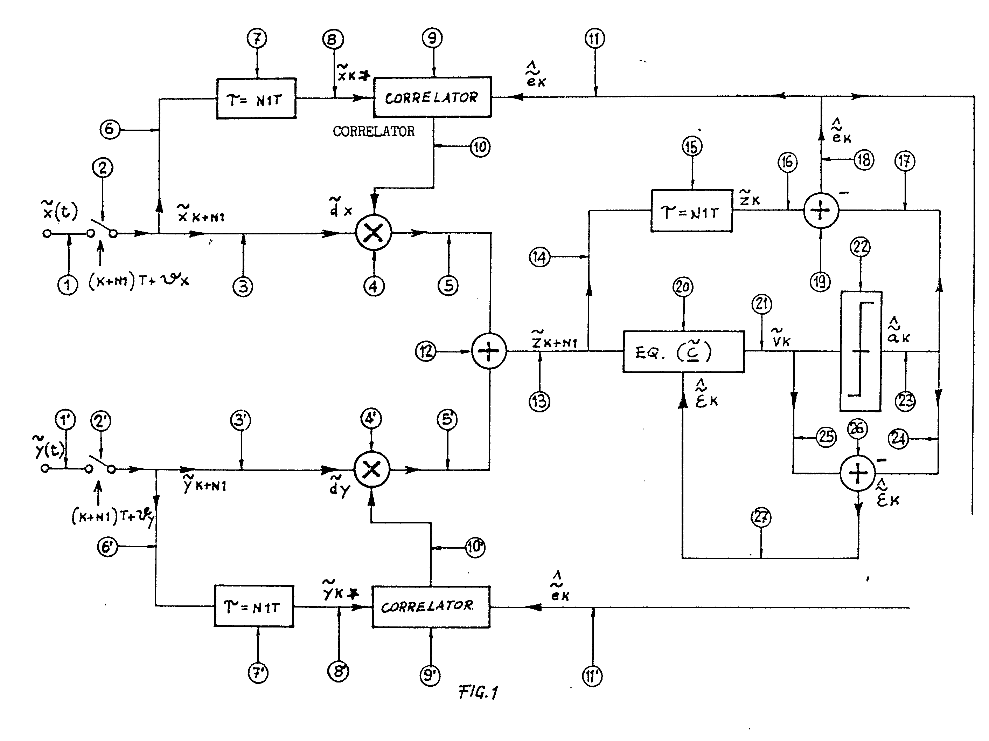

One of the possible fulfilment schemes is represented in Fig. 1, in which the symbol

$$-\boxed{\text{EQ } (\underline{c})}-$$

(20) indicates the adaptive equalizer (filter FIR with variable coefficients established by correlator units) of coefficients $\underline{\hat{c}}$ , the symbol

$$-\boxed{\text{CORRELATOR UNIT}}-$$

(9, 9$'$) indicates the series of the multiplier unit e of an adding register that accumulates the results of the multiplications, the symbol $\otimes$ (4, 4$'$) indicates a multiplier unit the symbol $\oplus$ (12, 19, 26) indicates an adder unit, the symbol

$$-\boxed{\tau = N_1 T}-$$

(7, 7$'$) indicates a delay equal to $N_1 T$, the symbol

$$-\diagdown\!\!- \quad (2,\ 2')$$

indicates a sampling unit, the symbol

$$-\boxed{\mathcal{F}}-$$

(22) indicates the decision circuit for symbols, the symbol - indicates a sign change, while the symbol $\maltese$ indicates the conjugated complex, finally all quantities represented are to be intended as complex quantities.

As it can be seen in the said Fig. 1, the signal $\tilde{x}(t)$ is transmitted by the line 1 through which it reaches the sampling unit 2, then the signal samples reach the multiplier unit 4 through the line 3. The coefficient $\tilde{d}_x$ to be applied to the multiplier unit through the line 10 is obtained passing the signal samples onto the line 6, in the delay circuit 7, in the line 8 that brings to the correlator unit 9 in which, after having taken the conjugated complex of the sample it is made the correlation among the signal samples and the error samples. A completely similar procedure is applied to the signal $\tilde{y}(t)$ that flows in all circuits and lines indicated by the apex exactly as already illustrated for the signal $\tilde{x}(t)$. After having made the multiplications 4 and 4$'$, the samples of the signals arrive to the adder unit 12 through the lines 5 and 5$'$; then through the line 13, the combined signal $\tilde{z}_{k+N1}$ is addressed toward the equalizer 20, which supplies at its output the samples $\tilde{v}_k$ that, using the line 21, are sent to the decision circuit 22 that carries out the decision and supplies the symbols $\hat{\tilde{a}}_k$. The samples $\tilde{v}_K$, through the line 25, reach the adder unit 26 where also the symbols decided and with changed sign arrive through the lines 23 and 24; the result of the adding $\hat{\tilde{\varepsilon}}_K$ through the line 27 updates the equalizer according to equation XX.

The samples $\tilde{z}_{K+N1}$ through the line 14, the delay circuit 15 and the line 16 reach the adding unit 19 where also the symbols decided and with changed sign are collected through the lines 23 and 17; the result of the adding $\hat{\tilde{e}}_K$ through the lines 18 and 11 updates the correlator unit 9 according to equation XVIII, while it updates the correlator unit 9' according to XIX through the lines 18' and 11'.

## B) COMBINATION DOWNSTREAM THE EQUALIZERS

We indicate:

$$\tilde{z}(t) = \sum_{i=-\infty}^{\infty} \tilde{a}_i \, \tilde{q}_z(t-i\tau) + \hat{n}_z(t) \qquad XXI$$

$$\tilde{s}(t) = \sum_{i=-\infty}^{\infty} \hat{a}_i \, \tilde{q}_s(t-i\tau) + \tilde{n}_s(t) \qquad XXII$$

the signals to be sampled and combined, at the output of the adaptive equalizers (supposed in the following, in an unbinding manner, as having the same number of coefficients), we have:

$$\tilde{x}_K = \sum_{n=-N_1}^{N_2} \tilde{c}_{xn} \, \tilde{z}_{K-n} \qquad XXIII$$

$$\tilde{y}_K = \sum_{n=-N_1}^{N_2} \hat{c}_{yn} \, \tilde{s}_{K-n} \qquad XXIV$$

$$\tilde{z}_K = \tilde{x}_K + \tilde{y}_K \qquad XXV$$

in the case of error at decision unit, we have:

$$\hat{\tilde{\varepsilon}}_K = \tilde{z}_K - \hat{\tilde{a}}_K \qquad XXVI$$

As usually we establish

$$\mathcal{E} \triangleq E\left\{ |\hat{\tilde{\varepsilon}}_K|^2 \right\} \qquad XXVII$$

Using the gradient algorithm, it is obtained:

$$\tilde{c}_{xn}^{(K+1)} = \tilde{c}_{xn}^{(K)} - \alpha' \hat{\tilde{\varepsilon}}_K \, \tilde{z}_{K-n}^* \qquad XXVIII$$

$$\tilde{c}_{yn}^{(K+1)} = \tilde{c}_{yn}^{(K)} - \alpha \hat{\tilde{\varepsilon}}_K \, \tilde{s}_{K-n}^* \qquad XXIX$$

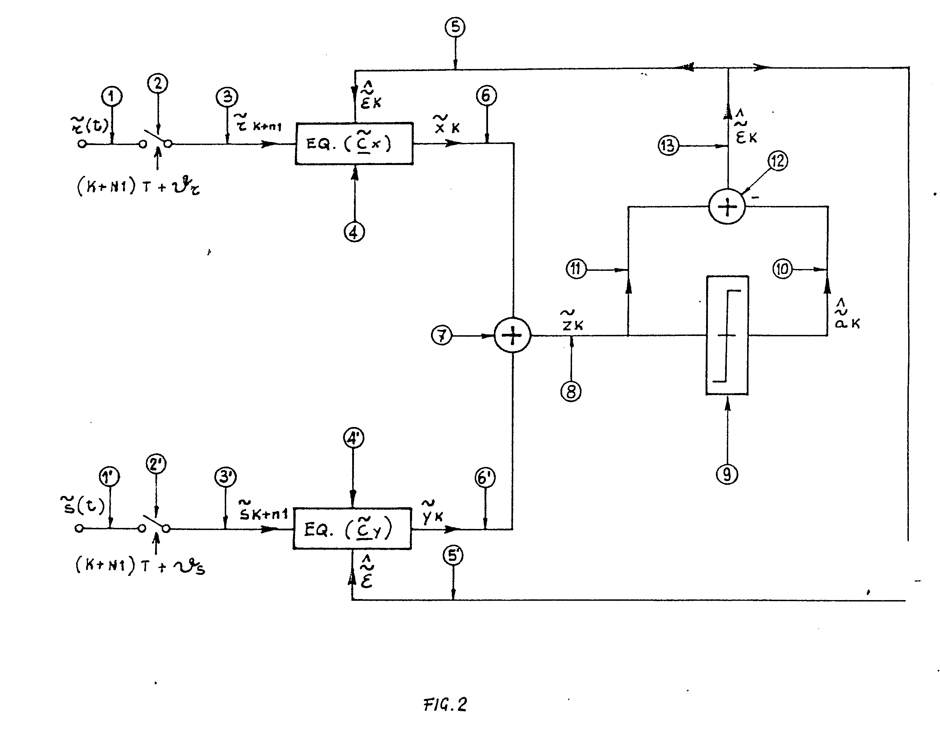

from which it is drawn the fulfilment scheme of the Fig. 2, in which the symbols

$$\underline{\phantom{-}}\diagdown\underline{\phantom{-}} \quad , \quad -\boxed{E\alpha(\xi)}- \quad , \quad \oplus \quad , \quad \boxed{\int} \quad , \quad \otimes \quad ,$$

have the above mentioned meaning.
Also in this case all represented quantities are to be intended as complex quantities.

In this case the signal $\tilde{r}(t)$ is sent through the line 1 to the sampling unit 2 and through the line 3 the samples $\tilde{r}_{K+N1}$ arrive to the adaptive equalizer 4.

At the output from the adaptive equalizer the signal samples reach, through the line 6, the adding node 7, in which the combination occurs.

The signal $\breve{s}(t)$ follows the same cycle of the signal $\tilde{r}(t)$ through all lines and circuits indicated by the apex until the adding node 7. The samples of combined signals $\bar{z}_K$ arrive, through the line 8, to the decision circuit 9 that supplies the estimations $\hat{a}_K$ of the transmitted symbols onto the line 10.

The samples $\bar{z}_K$ are sent to the adder unit 12 throught the line 11, where also estimated symbols and with changed sign arrive through the line 10. The adder unit output $\tilde{\varepsilon}_K$ is transmitted to the line 13, in which, through the lines 5 and 5', it reaches respectively the adaptive equalizer 4 and 4', that can be updated according to the equations XXVIII and XXIX.

## Claims

1) A system for minimizing the disturbances in the numerical transmissions, in which the same information is received by a plurality of receivers, characterized in that the combination of signals made available by the different receivers is carried out by imposing the criterion of the minimization of the mean square error, estimated in the combined signal, or of its equivalent quantities by means of the gradient algorithm.

2) A system according to claim 1, characterized in that it is one or more correlations between the received signals and the error are carried out, from which correlation the combination coefficients are obtained.

3) A system according to claim 2, characterized in that the combination coefficients are determined according to the algorithm (so-called, of the gradient) defined by the equation II referred in the description.

4) A system according to preceding claims, characterized in that the mean square error (or equivalent quantities) is calculated as described in the equation XVI (or equivalent equations) related in the description.

5) A system according to claims 1-3, characterized in that the mean square error (or equivalent quantities) is calculated as described in the equation XVII (or equivalent equations) related in the description.

6) A system substantially according to what described and represented.

7) A circuit for the fulfilment of the system according to preceding claims, including at least a multiplier for the signals received and one adding unit for the multiplied signals, characterized in that it includes a correlator implementing the gradient algorithm.

8) Circuit substantially according to what described and represented.

FIG.1

FIG.2

EP 0 339 349 A2